Europäisches Patentamt

(19) **European Patent Office**      (11) Numéro de publication: **0 161 129**

Office européen des brevets      **B1**

(12)      FASCICULE DE BREVET EUROPÉEN

(45) Date de publication du fascicule du brevet:      (51) Int. Cl.⁴: **C 23 C  22/74, C 09  5/10**
31.05.89

(21) Numéro de dépôt: 85400530.3

(22) Date de dépôt: 20.03.85

(54) Composition de revêtement anti-corrosion, procédé pour sa mise en oeuvre et éléments de boulonnerie revêtus.

(30) Priorité: 26.03.84 FR 8404661

(43) Date de publication de la demande:
13.11.85 Bulletin 85/46

(45) Mention de la délivrance du brevet:
31.05.89 Bulletin 89/22

(84) Etats contractants désignés:
AT BE CH DE FR GB IT LI LU NL SE

(56) Documents cité:
EP-A-0 017 243
FR-A-2 185 035
FR-A-2 215 453
GB-A-1 019 202
US-A-4 243 434

DACROMET 320 et 500 (Brochures techniques)
Rapport d'essais sur des vis revêtues DACROMET
DX500-(Renault)

(73) Titulaire: DACRAL S.A.
164, rue Ambroise Croizat
F-93200 Saint Denis (FR)

(72) Inventeur: Fourez, Michel
36, rue Victor Hugo Gouvieux
F-60500 Chantilly (FR)
Inventeur: Lonca, Michel
303, route de Rantigny
F-60290 Vaux sous Cambronne (FR)
Inventeur: Pichant, Patrick
3, allée des Charmes
F-60300 Avilly St. Léonard (FR)

(74) Mandataire: Warcoin, Jacques
Cabinet Régimbeau 26, avenue Kléber
F-75116 Paris (FR)

LIBERGRAF, STOCKHOLM 1990

## Description

La présente invention concerne une composition de revêtement anti-corrosion utile, en particulier, pour la protection des dispositifs vissés, un procédé pour sa mise en oeuvre et des dispositifs vissés ainsi revêtus.

On connaît des procédés pour revêtir des substrats métalliques avec des compositions contenant du chrome hexavalent, souvent fournies par de l'acide chromique, afin de conférer à ces substrats métalliques de boulonnerie une résistance à la corrosion.

FR-A-2 008 770 décrit un perfectionnement à ce type de composition dans lequel on ajoute un métal pulvérulent afin d'améliorer la résistance à la corrosion.

FR-A-2 149 434 décrit un autre perfectionnement aux compositions précédentes permettant d'améliorer les caractéristiques du revêtement obtenu et de faciliter son application.

US-A-4 266 975 décrit des compositions de revêtement perfectionnées du type de celles décrites au FR-A-2 008 770.

FR-A-2 215 453 vise essentiellement l'enrobage de pièces de titane en vue de les protéger à l'encontre de l'action galvanique due aux effets de couplage électrochimique existant entre l'aluminium et le titane. Les mélanges de revêtement décrits par FR-A-2 215 453 comprennent, à titre de constituant principal, une résine phénol-formaldéhyde qui subsiste en l'état au stade final du revêtement. Il s'agit donc là d'une peinture à base d'un liant organique.

GB-A-1 019 202 décrit un revêtement contenant une très forte proportion de téflon qui joue en fait le rôle de liant. Le dépôt de cette composition de protection nécessite un traitement thermique à une température supérieure à la température de fusion du téflon qui, par suite, migre en surface de la pièce à traiter. Il est donc impossible d'obtenir par un tel procédé une véritable couche de protection sacrificielle.

De façon générale, l'application d'un revêtement anticorrosion sur des boulons, des vis ou des écrous, que ce revêtement soit du type dépôt électrolytique, dépôt de peinture ou dépôt obtenu à partir de solutions de chrome hexavalent, modifie les caractéristiques de la zone de vissage. Ces modifications sont de façon générale des surépaisseurs, des modifications des caractéristiques de surface (glissance, adhérence, fiabilité du dépôt) ou des endommagements des filets.

Ces modifications conduisent à des tensions insuffisantes dans les parties filetées pour réaliser un assemblage fiable, même pour des couples de serrage importants.

Très souvent, le problème est encore aggravé si les mêmes éléments sont à nouveau desserrés et resserrés, les tensions obtenues sont alors encore plus faibles donc les assemblages encore moins résistants aux sollicitations extérieures.

Ainsi, dans le domaine des éléments vissés où les normes sont de plus en plus contraignantes, en particulier dans les chaînes de montage automatisées, il serait souhaitable de disposer de compositions qui, outre une excellente résistance à la corrosion, pourraient conférer aux éléments vissés des propriétés permettant d'obtenir des tensions élevées dans l'assemblage.

Ainsi, le revêtement doit, de préférence, permettre d'atteindre une valeur déterminée de la tension égale, en général, à 80 % de la limite élastique du boulon.

En outre, il est intéressant de pouvoir obtenir une bonne fiabilité des valeurs relation tension/couple de serrage d'une opération de serrage à l'autre avec le même boulon ou des boulons différents.

Les revêtements selon la technique antérieure, s'ils donnent parfaitement satisfaction au niveau des propriétés d'anti-corrosion, se sont révélés parfois insuffisants au niveau des propriétés mécaniques évoquées précédemment.

La présente invention propose des compositions qui, tout en conservant les propriétés d'anti-corrosion des compositions à base de chrome hexavalent, améliorent nettement les propriétés mécaniques du revêtement obtenu.

La présente invention propose une composition liquide de revêtement anti-corrosion à faible coefficient de frottement, pour la protection d'un substrat métallique, en particulier de boulons, vis ou écrous, comprenant:

- une solution de chrome hexavalent,
- un métal pulvérulent choisi parmi le zinc, le manganèse, l'aluminium, le magnésium, leurs mélanges et leurs alliages,
- un solvant organique, et
- un agent tensioactif non ionique,

caractérisée en ce qu'elle contient un mélange dudit métal pulvérulent et de polymère de tétrafluoroéthylène (PTFE), en dispersion dans un polyol ou un éther de polyol en présence dudit agent tensioactif non ionique présent à raison d'une quantité comprise entre 1 et 25 g/l et de préférence de 5 à 10 g/l de la composition totale.

L'utilisation d'un lubrifiant solide permet d'améliorer de façon décisive et totalement inattendue les propriétés mécaniques des revêtements obtenus comme cela sera démontré dans les essais rapportés ci-après.

Les compositions du type de celles de l'invention sont connues et sont décrites notamment dans FR-A-2 008 770 et dans US-A-4 266 975 et sont commercialisées sous le nom de DACROMET. C'est pourquoi certaines des variantes des compositions en cause pourront être envisagées en se référant notamment à ces brevets.

Les compositions selon la présente invention se présentent, de préférence, sous forme d'au moins deux composants séparés qui ne sont mélangés qu'au moment de l'utilisation, ceci pour éviter des réactions parasites.

Ainsi, en général, les compositions selon l'invention comportent au moins:

a) un composant constitué d'une solution de chrome hexavalent, par exemple de l'acide chromique, et
b) un composant comprenant le métal en poudre tel que zinc, manganèse, aluminium, magnésium, leurs mélanges et leurs alliages, en général sous forme de dispersion, notamment d'une pâte ou d'un liquide épais.

Ces compositions comportent parfois un troisième composant qui est un agent épaississant, qui lui aussi peut être conditionné séparément.

Le lubrifiant solide est de préférence sous forme finement divisée, poudre ou microbilles par exemple, et est de préférence dispersée en présence d'un agent tensioactif non ionique tel qu'un composé d'addition polyéthoxy alkylphénol par exemple le Triton CF 54 (Rhom et Haas). Cet agent tensioactif est utilisé en quantité comprise entre de préférence 1 à 25 g/l de la composition totale, de préférence au taux de 5 à 10 g/l car ce composant améliore nettement la résistance des revêtements selon l'invention. Ce tensioactif permettra également la dispersion des différents composants de la composition notamment le métal pulvérulent.

Les lubrifiants solides sont utilisés en quantités telles qu'ils conduisent à des teneurs en volume de l'ordre de 0,5 à 10 % du revêtement sec.

Il est bien entendu que l'invention concerne aussi bien les compositions dans lesquelles les différents composants sont conditionnés séparément que les mélanges de ces différents composants.

Comme cela vient d'être indiqué, les différents composants des compositions sont, en général, mélangés avant d'être utilisés pour former un revêtement sur le substrat à traiter qui est ensuite durci par chauffage comme cela sera décrit plus complètement ci-après.

Les compositions liquides de chrome hexavalent peuvent être notamment des solutions aqueuses d'acide chromique ou des solutions de sel de chrome hexavalent, ou du chrome hexavalent sous une autre forme. Comme celà est décrit dans le brevet US les compositions liquides de chrome hexavalent peuvent contenir de l'acide borique en quantité comprise entre 5 et 95 % en poids du composant acide chromique.

Ces solutions peuvent contenir, en outre, d'autres solvants tels que des alcools, des éthers ou des hydrocarbures divers; pour des raisons de commodité, on préférera, bien entendu, les solutions aqueuses.

Les compositions selon l'invention contiennent un réducteur, en tant que de besoin, le rôle de réducteur peut être joué par un polyol qui sert également en totalité ou en partie de support pour l'un des composants de la composition.

Le métal pulvérulent, en particulier le zinc, est conditionné, avant d'être mélangé, sous forme d'une pâte ou d'un liquide épais dans un polyol ou un éther de polyol tel que le dipropylène-glycol ou du diéthylène-glycol-monoéthyléther.

Les compositions selon l'invention pourront contenir, en outre, d'autres éléments ou composants.

Lorsque le composant additionnel est un agent épaississant, celui-ci peut être constitué d'un polymère non ionique soluble dans l'eau, tel qu'un dérivé de cellulose par exemple: HEC.

Les compositions selon l'invention sont plus particulièrement utilisables sur des substrats tels que l'acier.

La présente invention concerne, en outre, un procédé de revêtement de substrats mettant en oeuvre les compositions selon la présente invention.

Dans ce procédé:

— on effectue le revêtement du substrat avec la composition, et
— on chauffe le substrat revêtu jusqu'au durcissement du revêtement sur le substrat.

Ce durcissement inclut notamment l'évaporation des solvants, et les réactions chimiques internes qui permettent de parvenir à la formation d'un revêtement adhérent et résistant à la corrosion.

Bien que l'on puisse envisager d'utiliser dans certains procédés les différents composants de la composition de manière séparée, on préférera effectuer le revêtement du substrat avec un mélange comportant l'ensemble des composants de la composition.

Lorsque le mélange obtenu est homogène, on effectue le revêtement du substrat par toute méthode appropriée, notamment par trempage, en particulier lorsqu'il s'agit d'éléments de boulonnerie. Afin de parfaire le revêtement et d'assurer l'uniformité, celui-ci doit être égoutté, par exemple par centrifugation.

Les paramètres de l'étape de chauffage dépendront de la nature exacte du revêtement.

En général, le chauffage sera effectué à des températures comprises entre 220 et 350°C pendant un temps allant de quelques secondes à plusieurs heures en fonction de la température. On utilisera de préférence un chauffage de l'ordre de 280 à 320°C pendant quelques dizaines de minutes.

En général, l'étape de revêtement et de durcissement peut être effectuée plusieurs fois.

Les éléments ainsi revêtus peuvent éventuellement subir d'autres traitements tels que peinture et vernis.

Enfin, l'invention concerne des éléments comportant des filetages, notamment des vis, boulons ou écrous, comportant à titre de revêtement le résidu obtenu après chauffage d'une composition telle que décrite précédemment.

Les essais suivants permettent d'illustrer d'autres caractéristiques et avantages de la présente invention.

La composition mise en oeuvre est la suivante:

3

| Zinc lamellaire | 25,0 % | en poids du mélange |
|---|---|---|
| Dipropylène glycol | 16,5 % | "        " |
| Triton CF 54 | 0,5 % | "        " |
| HEC | 0,5 % | "        " |
| Acide borique | 1,3 % | "        " |
| Acide chromique | 3,7 % | "        " |
| Oxyde de zinc | 0,9 % | "        " |
| Eau, q.s.p. 100 % | | |

Le polytetrafluoroéthylène mis en oeuvre est l'HOSTAFLON TF VP 92.05 commercialisé par la firme Hoescht, P.M. 35 000 - 100 000, diamètre moyen des particules 5 à 7 μ.

Le traitement est effectué de la façon suivante:

Les substrats, vis ou boulons, sont prétraités de façon classique par dégraissage alcalin, rinçage et microsablage par exemple, puis trempés dans un bain obtenu par mélange des trois composants a), b) et c). Après le trempage, le substrat est centrifugé pour éliminer l'excès de composition puis soumis à une cuisson à des températures de l'ordre de 300°C pendant environ 30 minutes.

Le cycle de trempage, centrifugation et cuisson peut être renouvelé pour obtenir un revêtement d'environ 6 à 8 μ d'épaisseur.

Les essais suivants ont été réalisés:

On a étudié l'évolution relative du couple de serrage et de la tension sur un assemblage vissé pour différentes compositions de revêtement selon l'invention et selon la technique antérieure.

Les revêtements ont été appliqués sur des boulons:

ø:      10 mm
Pas:    1,5
Qualité: 10.9

et le serrage est effectué sur un écrou zingué bichromaté qualité 10.

Les compositions selon la présente invention comportent des taux variables de PTFE indiqués en pourcentage en volume du revêtement.

Les essais de comparaison ont été effectués pour les revêtements suivants:

Série 1: DACROMET (produit vendu par la Demanderesse)
Série 2:  Dépôt de zinc électrolytique bichromaté 10 - 12 μ
Série 3:  Dépôt de Cadmium électrolytique bichromaté 10 - 12 μ.

On enregistre le couple de serrage total, le couple de serrage sous tête et la tension par l'intermédiaire d'un appareillage Erichsen.

Dans les conditions de l'expérience avec les boulons présentant un revêtement zingué bichromaté, il n'a pas été possible d'obtenir au serrage 80 % de la limite élastique et il a été constaté une grande dispersion des allures des courbes d'une opération de serrage à l'autre.

Le traitement au DACROMET seul est plus satisfaisant, bien qu'il soit parfois difficile d'obtenir 80 % de la limite élastique.

Les résultats observés avec le revêtement au cadmium bichromaté sont voisins de ceux observés pour le revêtement au DACROMET mais la présence de cadmium fait que ce type de revêtement sera, pour raisons écologiques, abandonné au niveau industriel.

Au contraire, les compositions selon la présente invention permettent des couples de serrage plus faibles pour des tensions équivalentes.

Au taux de 5 et 7,5 % de PTFE, il est possible à chaque opération de serrage de dépasser 80 % de la limite élastique.

On obtient même a ces taux une fiabilité excellente des valeurs relatives de tension/couple de serrage d'une opération de serrage à l'autre avec le même boulon ou un boulon différent.

Les résultats mesurés sont rassemblés sur le tableau ci-après:

| Série n° | Revêtement | Couple de serrage total à 60 % de la limite élastique (N.m) |
|---|---|---|
| 1 | DMT STD | 77 |
| 2 | Zingué bichro 10 - 12 μ | 85 |
| 3 | Cadmié bichro 10 - 12 μ | 63 |

| 4 | Composition 1 (7,5 % PTFE) | 54 |
| 5 | Composition 2 (5 % PTFE) | 59 |
| 6 | Composition 3 (2,5 % PTFE) | 64 |

Les séries 4 à 6 selon l'invention son réalisés en ajoutant au DACROMET standard (DMT STD) diverses quantités de PTFE qui sont indiquées en % en volume du revêtement sec. 60 % de la limite élastique correspondant à 31.000 N.

Ces essais on mis en évidence que grâce aux revêtements selon la présente invention, on pouvait obtenir, outre des propiétés d'anti-corrosion:

— un meilleur contrôle des opérations de serrage,
— des tensions élevées voisines de la limite élastique,
— une conservation de ces propriétés après plusieurs opérations de vissage, dévissage, et
— un assemblage solide quelles que soient les conditions d'utilisation.

## Revendications

1. Composition liquide de revêtement anti-corrosion à faible coefficient de frottement, pour la protection d'un substrat métallique, en particulier de boulons, vis ou écrous, comprenant:

— une solution de chrome hexavalent,
— un metal pulvérulent choisi parmi le zinc, le manganèse, l'aluminium, le magnésium, leurs mélanges et leurs alliages,
— un solvant organique, et
— un agent tensioactif non ionique,
caractérisée en ce qu'elle contient un mélange dudit métal pulverulent et de polymère de tétrafluoroéthylène (PTFE), en dispersion dans un polyol ou un éther de polyol en présence dudit agent tensioactif non ionique présent à raison d'une quantité comprise entre 1 et 25 g/l et de préférence de 5 à 10 g/l de la composition totale.

2. Composition selon la revendication 1, caractérisée en ce que le polyol est du dipropylèneglycol.

3. Composition selon l'une des revendications 1 et 2, caractérisée en ce qu'elle comporte en outre un agent épaississant, de préférence un dérivé de cellulose.

4. Composition selon l'une des revendications 1 à 3, caractérisée en ce que ladite composition contient une quantité de PTFE telle qu'elle conduit à un taux de PTFE compris entre 0,5 et 10 % en volume du revêtement sec sur le substrat.

5. Composition selon l'une des revendications 1 à 4, caractérisée en ce que la composition liquide contenant le chrome hexavalent contient en outre de l'acide borique.

6. Procédé de revêtement d'un substrat à l'aide d'un revêtement anti-corrosion, caractérisé en ce que:

— on effectue le revêtement du substrat avec une composition telle que définie à l'une des revendications 1 à 5, et
— on chauffe le substrat ainsi revêtu à une température comprise entre 220 et 350°C, de préférence entre 280 et 320°C, jusqu'au durcissement du revêtement.

## Claims

1. Liquid composition of an anticorrosive coating having a low coefficient of friction, for the protection of a metallic substrate, in particular of bolts, screws or nuts, comprising:

— a solution of hexavalent chromium,
— a powdered metal selected from zinc, manganese, aluminium, magnesium, their mixtures and their alloys,
— an organic solvent, and
— a nonionic surfactant

characterized in that it contains a mixture of the said powdered metal and of polytetrafluoroethylene (PTFE) dispersed in a polyol or a polyol ether in the presence of the said nonionic surfactant which is present in an amount of between 1 and 25 g/l and preferably of 5 to 10 g/l of the total composition.

2. Composition according to claim 1, characterized in that the polyol is dipropylene glycol.

3. Composition according to one of claims 1 and 2, characterized in that it also contains a thickening agent, preferably a cellulose derivative.

4. Composition according to one of claims 1 to 3, characterized in that the said composition contains a quantity of PTFE such that it produces a content of PTFE of between 0.5 and 10 % by volume in the dry coating on the substrate.

5. Composition according to one of claims 1 to 4, characterized in that the liquid composition containing hexavalent chromium additionally contains boric acid.

6. Process for coating a substrate using an anti-corrosive coating, characterized in that:

— the coating of the substrate is carried out using a composition such as defined in one of claims 1 to 5, and
— the substrate thus coated is heated to a temperature of between 220 and 350°C, preferably between 280 and 320°C, until the coating has hardened.

**Patentansprüche**

1. Flüssige korrosionsverhindernde Überzugszusammensetzung mit niedrigem Reibungskoeffizienten für den Schutz eines metallischen Substrats, insbesondere Bolzen, Schrauben oder Muttern, umfassend

— eine Lösung von sechswertigem Chrom,
— ein pulverförmiges Metall, welches ausgewählt ist aus Zink, Mangan, Aluminium, Magnesium, deren Gemischen und deren Legierungen,
— ein organisches Lösungsmittel, und ein
— nichtionisches oberflächenaktives Mittel,

dadurch *gekennzeichnet*, daß sie ein Gemisch aus dem pulverförmigen Metall und ein Polymer von Tetrafluoräthylen (PTFE) enthält in Dispersionin in einem Polyol oder in einem Polyoläther in Gegenwart des nichtionischen oberflächenaktiven Mittels, welches in einer Menge zwischen 1 und 25 g/l und vorzugsweise von 5 bis 10 g/l der Gesamtzusammensetzung vorhanden ist.

2. Zusammensetzung nach Anspruch 1,
dadurch gekennzeichnet, daß das Polyol Dipropylenglykol ist.

3. Zusammensetzung nach einem der Ansprüche 1 oder 2,
dadurch gekennzeichnet, daß sie weiterhin ein Verdickungsmittel enthält, vorzugsweise ein Zellulosederivat.

4. Zusammensetzung nach einem der Ansprüche 1 bis 3,
dadurch gekennzeichnet, daß sie eine Menge von Polytetrafluoräthylen enthält, die dazu führt, daß Polytetrafluoräthylen mit 0,5 bis 10 Volumenprozent des trockenen Überzuges auf dem Substrat vorhanden ist.

5. Zusammensetzung nach einem der Ansprüche 1 bis 4,
dadurch gekennzeichnet, daß die flüssige Zusammensetzung, welche das sechswertige Chrom enthält, weiterhin Borsäure enthält.

6. Verfahren zum Überziehen eines Substrats mit einem korrosionsverhindernden Überzug,
dadurch *gekennzeichnet*, daß man das Überziehen des Substrats mit einer Komposition durchführt, wie sie in einem der Ansprüche 1 bis 5 definiert ist, und
man das auf diese Weise überzogene Substrat auf eine Temperatur zwischen 220 und 350°C, vorzugsweise zwischen 280 und 320°C bis zur Härtung des Überzuges erhitzt.